# FASCICULE DE BREVET EUROPEEN

(11) **EP 4 440 977 B1**
(45) Date de publication et mention de la délivrance du brevet: **02.07.2025**
(21) Numéro de dépôt: 22822466.3
(22) Date de dépôt: 25.11.2022
(51) Int. Cl.: B66F 9/075, B60K 15/07, B60K 1/00, B60K 17/34, B60K 15/03, B60K 15/063, B60K 25/02

(54) **MACHINE DE MANUTENTION AVEC UN RÉSERVOIR CONTENANT DU GAZ SOUS PRESSION**
BEHANDLUNGSMASCHINE MIT DRUCKGAS ENTHALTENDEM TANK
HANDLING MACHINE WITH A TANK CONTAINING PRESSURIZED GAS

(30) Priorité: 01.12.2021 FR 2112815
(43) Date de publication de la demande: 09.10.2024
(73) Titulaire: MANITOU BF, 44150 Ancenis (FR)
(72) Inventeur: MERTEN, Hervé, 44150 ANCENIS (FR); MORON, Mickaël, 44150 ANCENIS (FR)
(74) Mandataire: Loyer & Abello
(86) Numéro de dépôt international: PCT/EP2022/083365
(87) Numéro de publication internationale: WO 2023/099360

(56) Documents cités:
- EP-A1- 1 038 826
- EP-A1- 3 812 341
- CN-A- 112 194 055
- DE-A1- 102014 101 100
- US-A- 4 750 752
- US-A1- 2006 006 303
- US-A1- 2007 056 976
- US-B2- 7 284 627

## Description

### Domaine technique

L'invention se rapporte au domaine des machines de manutention.

L'invention vise notamment une machine de manutention, tel qu'un chariot élévateur, qui est équipé d'au moins un réservoir contenant du gaz sous pression.

### Arrière-plan technologique

Le document US7284627 concerne un chariot élévateur équipé d'un ou plusieurs réservoirs de gaz. Ce document présente, en relation avec sa [Fig.1], un état de la technique dans lequel les réservoirs de gaz sont disposés transversalement, à l'horizontale, derrière la cabine de pilotage du chariot élévateur. Cette disposition des réservoirs pose des problèmes de visibilité au conducteur, notamment lorsque le chariot élévateur circule en marche arrière. En outre, elle ne permet pas une protection satisfaisante des réservoirs de gaz. Ce document US7284627 propose de résoudre ces problèmes, en disposant les réservoirs de gaz dans un boîtier amovible qui est logé en-dessous du siège conducteur. Cette disposition n'est toutefois pas non plus pleinement satisfaisante. En effet, elle conduit à diminuer la garde au sol du chariot élévateur et/ou à augmenter sa hauteur. Ceci n'est pas possible pour tous les types de chariots élévateurs et notamment pour les chariots élévateurs tout terrain qui doivent conserver une garde au sol importante et dont la hauteur doit être limitée au maximum.

### Résumé

Une idée à la base de l'invention consiste à proposer une machine de manutention équipée d'au moins un réservoir contenant du gaz sous pression et dans laquelle la disposition du réservoir ne nuit pas à la visibilité du conducteur et offre une protection satisfaisante du réservoir, et cela, sans diminuer la garde au sol ni augmenter la hauteur de la machine de manutention.

Selon un premier objet, l'invention propose une machine manutention comportant :
- un châssis ;
- un arbre de roue avant et un arbre de roue arrière s'étendant transversalement et respectivement équipés de deux roues avant et de deux roues arrière ;
- un dispositif de manutention de charge qui est monté à l'avant du châssis,
- une cabine de pilotage fixée au châssis et équipée d'un siège ; la cabine de pilotage comportant une structure de cabine comportant deux arceaux latéraux, chaque arceau latéral comportant un montant avant et un montant arrière reliés l'un à l'autre ; et
- au moins un réservoir contenant du gaz sous pression qui est fixé au châssis et est positionné, au moins en partie entre le montant arrière de l'un des arceaux latéraux et l'une des roues arrières.

En d'autres termes, le réservoir comporte au moins un point situé sur une droite reliant un point de l'une des roues arrière et un point du montant arrière de l'un des arceaux latéraux.

Ainsi, compte-tenu de la disposition précitée du réservoir, il ne nuit pas à la visibilité du conducteur notamment lorsque la machine recule et cela sans diminuer la garde au sol ni augmenter la hauteur de la machine de manutention. En outre, le réservoir est positionné à l'extérieur de la cabine de pilotage, ce qui permet d'assurer une meilleure sécurité du conducteur, notamment en cas de fuite de gaz ou d'incendie.

Selon des modes de réalisation, une telle machine de manutention peut présenter une ou plusieurs des caractéristiques suivantes.

Selon un mode de réalisation, la cabine de pilotage est portée par le châssis entre l'arbre de roue avant et l'arbre de roue arrière.

Selon un mode de réalisation, l'arceau latéral et la roue arrière entre lesquels est positionné le réservoir sont disposés du même côté de la machine de manutention.

Selon un mode de réalisation chaque montant arrière comporte une portion supérieure et une portion inférieure inclinée l'une par rapport à l'autre, la portion inférieure étant inclinée vers l'arrière en direction de la portion supérieure, le réservoir étant positionné entre la portion inférieure du montant arrière et la roue arrière.

Selon un mode de réalisation, la portion supérieure des montants arrière longe un pare-brise arrière de part et d'autre de celui-ci.

Selon un mode de réalisation, chaque montant avant comporte une portion supérieure et une portion inférieure, la portion supérieure du montant avant longeant l'un des bords latéraux d'un pare-brise avant du chariot élévateur et la portion inférieure du montant avant étant arquée de façon à épouser une portion supérieure d'une des roues avant.

Selon un mode de réalisation, chaque arceau latéral comporte une partie supérieure et une partie inférieure qui s'étendent sensiblement horizontalement et qui relient le montant arrière et le montant avant l'un à l'autre.

Selon un mode de réalisation, la portion supérieure du montant arrière est inclinée vers l'avant depuis la portion inférieure.

Selon un mode de réalisation, le réservoir présente une forme de cylindre de révolution autour d'un axe central X, ledit axe central X étant incliné, de bas en haut, vers l'arrière. Ceci permet d'optimiser les dimensions du réservoir en fonction de la géométrie de l'espace disponible entre la portion inférieure du montant arrière et la roue arrière.

Selon un mode de réalisation, la portion inférieure du montant arrière s'étend selon un axe Y et, en projection dans un plan longitudinal, ledit axe Y et l'axe central X sont parallèles l'un à l'autre ou forment ensemble un angle inférieur à 30°, avantageusement inférieur à 15° et de préférence inférieur à 10°. Ceci permet d'optimiser encore davantage les dimensions du réservoir.

Selon un mode de réalisation, la machine de manutention comporte au moins deux réservoirs contenant du gaz sous pression et fixés au châssis, les deux réservoirs étant respectivement positionnés entre le montant arrière de l'un et l'autre des arceaux latéraux et l'une des roues arrière. Ainsi, au moins un réservoir est positionné de part et d'autre de la machine de manutention.

Selon un mode de réalisation, la machine comporte au moins deux réservoirs contenant du gaz sous pression et fixés au châssis, les deux réservoirs étant positionnés entre le montant arrière de l'un des arceaux latéraux et l'une des roues arrière.

Selon un mode de réalisation, les deux réservoirs présentent une forme de cylindre de révolution respectivement autour d'un axe central X et d'un axe central X', lesdits axes centraux X et X' étant parallèles l'un à l'autre.

Selon un mode de réalisation, les axes centraux X et X' sont inclinés, de bas en haut vers l'arrière.

Selon un mode de réalisation, en projection dans un plan longitudinal, l'axe Y et les axes centraux X sont parallèles ou l'axe Y forme avec chacun des axes centraux X et X' un angle inférieur à 30°, avantageusement inférieur à 15° et de préférence inférieur à 10°. Ceci permet d'optimiser les dimensions des réservoirs en fonction de la géométrie de l'espace disponible entre la portion inférieure du montant arrière et la roue arrière.

Selon un mode de réalisation, l'axe central X du réservoir s'étend sensiblement dans un plan longitudinal passant par l'une des roues avant et par l'une des roues arrière, lesdites roue avant et arrière étant disposés du même côté de la machine de manutention.

Selon un mode de réalisation, la machine de manutention comporte en outre un compartiment arrière fixé au châssis derrière la cabine de pilotage.

Selon un mode de réalisation, la machine de manutention comporte en outre un moteur qui est configuré pour assurer le déplacement du chariot élévateur.

Selon un mode de réalisation, le moteur est logé dans le compartiment arrière.

Selon un mode de réalisation, le moteur est accouplé à au moins l'un des arbres de roue avant et arrière et, de préférence aux deux arbres de roue avant et arrière, par un dispositif de transmission.

Selon un mode de réalisation, le moteur est un moteur thermique qui est relié à l'au moins un réservoir par un circuit d'alimentation et qui est destiné à être alimenté avec le gaz contenu dans ledit réservoir.

Selon un autre mode de réalisation, le réservoir contient de l'hydrogène et le moteur est un moteur électrique qui est raccordé à un système d'alimentation électrique, le système d'alimentation électrique comportant une pile à combustible qui est reliée à l'au moins un réservoir par un circuit d'alimentation et qui est destinée à être alimentée avec l'hydrogène contenu dans ledit réservoir.

Selon un mode de réalisation, le système d'alimentation électrique comporte en outre un dispositif de stockage d'énergie comprenant une ou plusieurs batteries et/ou un ou plusieurs supercondensateurs.

Selon un mode de réalisation, la pile à combustible et/ou le dispositif de stockage d'énergie sont logés dans le compartiment arrière.

Selon un mode de réalisation, l'au moins un réservoir contient un gaz choisi parmi le Gaz Naturel Liquéfié (GNL), le Gaz de Pétrole Liquéfié (GPL) et l'hydrogène.

Selon un mode de réalisation, le réservoir contient de l'hydrogène et est adapté pour stocker l'hydrogène à l'état gazeux à une pression maximale comprise entre 300 et 700 bars, par exemple de l'ordre de 350 bars.

Selon un mode de réalisation, le compartiment arrière comporte un capot et un ou plusieurs réservoirs contenant du gaz sous pression qui sont positionnés, à l'horizontale, transversalement et fixés sur ledit capot.

Selon un mode de réalisation, le dispositif de manutention de charge est un mât de levage.

Selon un mode de réalisation, la machine de manutention est un chariot élévateur.

Selon un mode de réalisation, le mât de levage comporte un tablier porte-charge sur lequel sont fixés des fourches et qui est monté mobile le long du mât de levage.

Selon un mode de réalisation, les roues arrière sont directrices.

Selon un mode de réalisation, les roues arrière présentent un diamètre inférieur à celui des roues avant. Ceci permet d'assurer une meilleure maniabilité de la machine de manutention. En outre, ceci conduit à ménager entre au moins l'une des roues arrière et le montant arrière de l'un des arceaux latéraux, un espace suffisant pour autoriser le positionnement d'un réservoir.

Selon un mode de réalisation, les arceaux latéraux sont reliés l'un à l'autre par des traverses.

Selon un mode de réalisation, la garde au sol de la machine de manutention est supérieure à 160 mm et de préférence supérieure à 250 mm.

### Breve description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] illustre un chariot élévateur selon un premier mode de réalisation.
[Fig.2] La [Fig.2] illustre un chariot élévateur selon un deuxième mode de réalisation.
[Fig.3] La [Fig.3] illustre un chariot élévateur selon un troisième mode de réalisation.
[Fig.4] La [Fig.4] illustre schématiquement le groupe motopropulseur du chariot élévateur selon une première variante de réalisation.
[Fig.5] La [Fig.5] illustre schématiquement le groupe motopropulseur du chariot élévateur selon une seconde variante de réalisation.

### Description des modes de réalisation

Par convention, la direction « longitudinale » de la machine de manutention correspond à l'orientation avant-arrière de la machine. Par ailleurs, les termes « arrière » et « avant », respectivement désignés « AR » et « AV » sur les figures, sont utilisés pour définir la position relative d'un élément par rapport à un autre selon la direction longitudinale. La direction « transversale » est orientée perpendiculairement à la direction longitudinale.

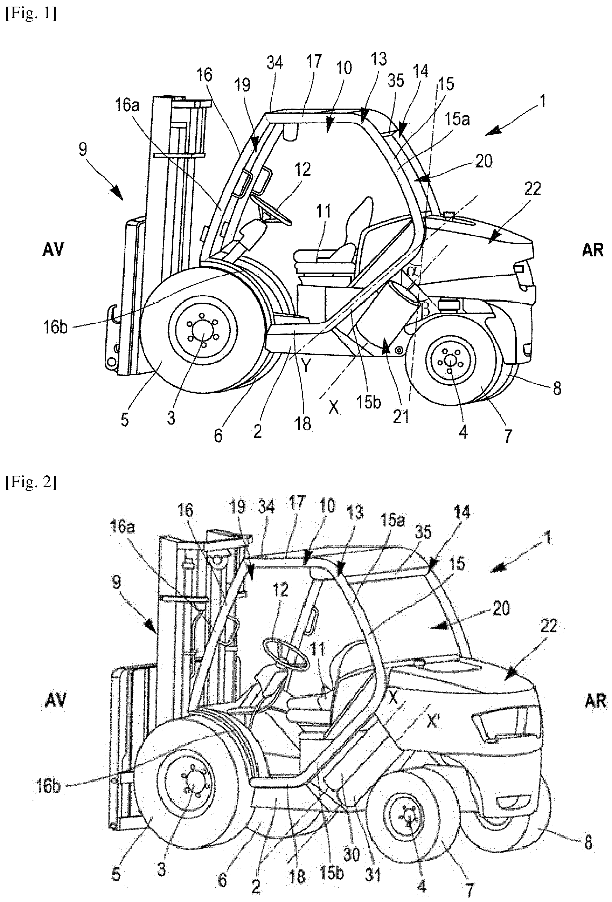

En référence à la [Fig.1], on décrit une machine manutention, du type chariot élévateur 1, selon un premier mode de réalisation.

Le chariot élévateur 1 comporte un châssis 2, mobile. Pour ce faire, le chariot élévateur 1 comporte deux arbres de roue, un arbre de roue avant 3 et un arbre de roue arrière 4 qui sont chacun montés sur le châssis 2 selon un axe transversal et sont chacun équipés de deux roues, l'une à gauche 5, 7 et l'autre à droite 6, 8. Au moins l'un des arbres de roue avant 3 et arrière 4 est mobile en rotation sur le châssis 2. De préférence, les deux arbres de roue avant 3 et arrière 4 sont montés mobiles en rotation sur le châssis 2 et sont accouplés à un moteur afin d'assurer le déplacement du chariot élévateur 1. Dans ce cas, le chariot élévateur 1 peut ainsi être qualifié de chariot élévateur tout terrain, c'est-à-dire à quatre roues motrices.

De manière avantageuse, les roues arrière 7, 8 sont directrices et présentent un diamètre inférieur à celui des roues avant 5, 6. Ceci permet d'optimiser l'adhérence et d'offrir un plus faible rayon de braquage pour une meilleure maniabilité du chariot élévateur 1.

Le chariot élévateur 1 comporte un dispositif de manutention de charge 9 qui est monté à l'avant du châssis 2. Le dispositif de manutention de charge 9 est ici un mât de levage qui est porté à l'avant du châssis 2 et qui comporte un tablier porte-charge sur lequel sont fixé le ou les outils, tel qu'une fourche, et qui est monté mobile verticalement le long du mât de levage entre une position extrême abaissée et une position extrême relevée. Le mât de levage peut être actionné hydrauliquement au moyen d'un ou plusieurs vérins hydrauliques ou par des chaînes au moyen d'un moteur hydraulique.

Par ailleurs, le chariot élévateur 1 comporte une cabine de pilotage 10 qui est portée par le châssis 2, entre l'arbre de roue avant 3 et l'arbre de roue arrière 4. Cette cabine de pilotage 10 est équipée d'un poste de conduite comprenant un siège 11 sur lequel le conducteur peut prendre place pour la conduite du chariot élévateur 1. Le poste de conduite comporte également des équipements de commande du chariot élévateur 1, tels qu'un volant de direction 12, une pédale d'accélération, une pédale de frein et un levier de commande du dispositif de manutention de charge 9.

La cabine de pilotage 10 comporte une structure de cabine comportant deux arceaux latéraux 13, 14 qui permettent notamment de protéger le conducteur en cas de retournement du chariot élévateur 1. Les arceaux latéraux 13, 14 sont reliés l'un à l'autre par des traverses 34, 35. Chacun des arceaux latéraux 13, 14 s'étend sensiblement dans un plan vertical parallèle à la direction longitudinale du chariot élévateur 1.

Chacun des arceaux latéraux 13, 14 comporte un montant arrière 15, un montant avant 16 ainsi qu'une partie supérieure 17 et une partie inférieure 18 qui s'étendent sensiblement horizontalement. La partie supérieure 17 relie les extrémités supérieures du montant arrière 15 et du montant avant 16 tandis que la portion inférieure 18 relie les extrémités inférieures du montant arrière 15 et du montant avant 16.

Le montant avant 16 comporte une portion supérieure 16a qui longe l'un des bords latéraux du pare-brise avant 19 du chariot élévateur 1 et une portion inférieure 16b qui est arquée de façon à épouser une portion supérieure d'une des roues avant 5, 6.

Par ailleurs, le montant arrière 15 comporte une portion supérieure 15a et une portion inférieure 15b inclinées l'une par rapport à l'autre. La portion supérieure 15a est inclinée vers l'avant depuis la portion inférieure 15b. Elle longe l'un des bords latéraux du pare-brise arrière 20 du chariot élévateur 1. La portion inférieure 15b du montant arrière 15 est quant à elle inclinée vers l'arrière depuis la partie inférieure 18 de l'arceau latéral 13, 14 en direction de la portion supérieure 15a. La partie inférieure 18 de l'arceau latéral 13, 14 est ainsi disposée selon la direction longitudinale du chariot élévateur 1 entre l'une des roues avant 5, 6 et l'une des roues arrière 7, 8. La portion inférieure 15b du montant arrière 15 s'étend globalement selon un axe Y qui, en projection dans un plan longitudinal, est incliné d'un angle α par rapport à un axe vertical dudit plan longitudinal.

Le chariot élévateur 1 comporte également un ou plusieurs réservoirs 21 destinés à contenir du gaz sous pression. Le(s) réservoir(s) 21 peut notamment contenir un gaz choisi parmi le Gaz Naturel Liquéfié (GNL), le Gaz de Pétrole Liquéfié (GPL) et l'hydrogène. Le réservoir 21 présente une forme cylindrique de révolution autour d'un axe central X.

Dans la variante de réalisation dans laquelle le gaz stocké est de l'hydrogène, le réservoir 21 est adapté pour stocker l'hydrogène à l'état gazeux à une pression maximale comprise entre 300 et 700 bars, par exemple de l'ordre de 350 bars.

A l'arrière de la cabine de pilotage 10, le chariot élévateur 1 comporte un compartiment arrière 22 qui est destiné au logement d'au moins un moteur configuré pour assurer le déplacement du chariot élévateur 1.

Dans le mode de réalisation illustré sur la [Fig.1], le réservoir 21 est fixé au châssis 2 et est positionné entre le montant arrière 15 de l'un des arceaux latéraux 13, 14 et la roues arrière 7, 8 qui est disposé du même côté du chariot élévateur 1 que ledit arceau latéral 13, 14. Le réservoir 21 est plus particulièrement positionné, à l'avant du compartiment arrière 22, et axialement entre la portion inférieure 15b du montant arrière 15 de l'un des arceaux latéraux 13, 14 et la roue arrière 4 correspondante. Ainsi, le réservoir 21 est positionné à l'extérieur de la cabine de pilotage 10, ce qui permet d'assurer la sécurité du conducteur, notamment en cas de fuite de gaz ou d'incendie.

L'axe central X du réservoir s'étend sensiblement dans un plan longitudinal parallèle à l'axe longitudinal du chariot élévateur 1. Ce plan longitudinal passe avantageusement par l'une des roues avant 5, 6 et par l'une des roues arrière 7, 8. En outre, en projection dans ledit plan longitudinal, l'axe central X du réservoir 21 est incliné d'un angle β par rapport à un axe vertical. Le réservoir 21 est incliné dans le même sens que la portion arrière 15b du montant arrière 15 de l'arceau latéral 13, 14, c'est-à-dire de bas en haut, vers l'arrière du chariot élévateur 1. Considérés en projection dans un plan longitudinal, les axes X et Y sont parallèles ou forment, l'un par rapport à l'autre, un angle qui est inférieur à 30°, avantageusement inférieur à 15° et de préférence inférieur à 10°. Ceci permet d'optimiser les dimensions du réservoir 21 en fonction de l'espace disponible entre la portion inférieure 15b du montant arrière 15 et la roue arrière 4.

Un tel positionnement du réservoir 21 ne conduit pas à une diminution de la garde au sol du chariot élévateur 1, comme dans l'état de la technique. Ainsi, la garde au-sol est avantageusement supérieure à 160 mm, de préférence supérieure à 250 mm et par exemple de l'ordre de 320 mm.

De manière avantageuse, le chariot élévateur 1 comporte un réservoir 21, tel que décrit ci-dessus, de chaque côté du chariot élévateur 1.

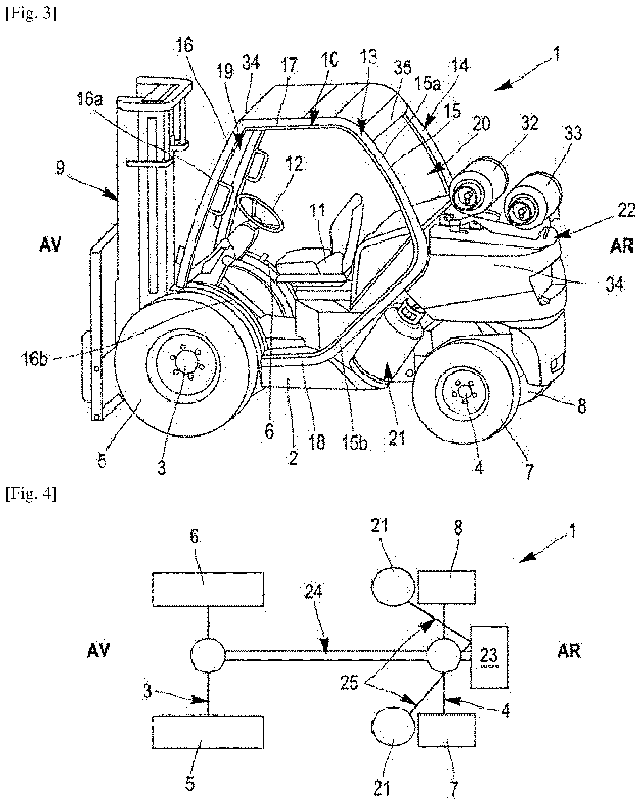

La [Fig.4] illustre de manière schématique le groupe motopropulseur du chariot élévateur 1 selon une première variante de réalisation. Le groupe motopropulseur comporte un moteur 23 qui est accouplé à au moins l'un des arbres de roue 3, 4 et avantageusement aux deux arbres de roue 3, 4 par un dispositif de transmission 24. Selon une variante de réalisation, le dispositif de transmission 24 est un dispositif mécanique. De manière alternative, le dispositif de transmission 24 est un dispositif de transmission hydraulique. Dans un tel cas, le moteur 23 est accouplé à une pompe qui entraîne des moteurs hydrauliques pour chacun des deux arbres de roue 3, 4.

Dans ce mode de réalisation, le moteur 23 est un moteur à combustion qui est relié au(x) réservoir(s) 21 par un circuit d'alimentation 25 et qui est alimenté avec le gaz stocké dans le(s) réservoir(s) 21.

Selon un mode de réalisation, le moteur 23 est accouplé à une pompe permettant l'actionnement hydraulique du mât de levage. Selon un autre mode de réalisation, le chariot élévateur 1 comporte un autre moteur, par exemple électrique, qui est accouplé à la pompe permettant l'actionnement hydraulique du mât de levage.

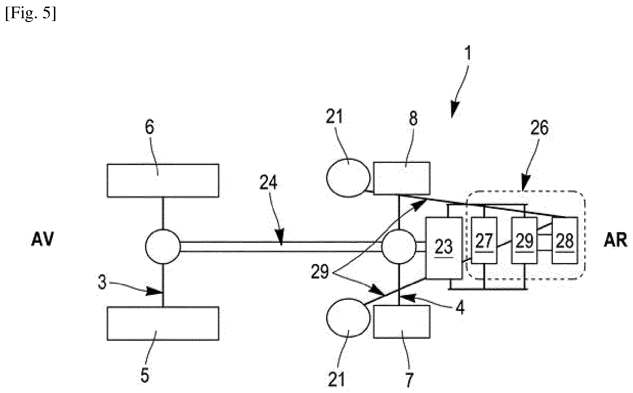

La [Fig.5] illustre schématiquement le groupe motopropulseur du chariot élévateur 1 selon une seconde variante. Le moteur 23 est également accouplé à au moins l'un des arbres de roue 3, 4 et avantageusement aux deux arbres de roue 3, 4 par un dispositif de transmission 24. Dans ce mode de réalisation, le moteur 23 est un moteur électrique. Il est alimenté par un système d'alimentation électrique 26.

Le système d'alimentation électrique 26 comprend notamment un dispositif de stockage d'énergie 27 comprenant une ou plusieurs batteries et/ou un ou plusieurs supercondensateurs.

Le système d'alimentation électrique 26 comporte également une pile à combustible 28. La pile à combustible 28 et le dispositif de stockage d'énergie 27 sont électriquement raccordés, d'une part, l'un à l'autre et d'autre part, en parallèle au moteur 23.

La pile à combustible 28 est reliée au(x) réservoir(s) 21 par un circuit d'alimentation 29 et est ainsi destinée à être alimentée avec l'hydrogène stocké dans le(s) réservoir(s) 21. Le circuit d'alimentation 29 est notamment équipé d'un détendeur permettant de faire baisser la pression de l'hydrogène. La pile à combustible 28 est, en outre, équipée d'un compresseur d'alimentation en air permettant de compresser l'air comburant à l'entrée des cellules de la pile à combustible 28. La pile à combustible 28 peut également comporter un dispositif humidificateur permettant d'humidifier l'hydrogène et l'air à l'entrée de la pile à combustible 28.

Le système d'alimentation électrique 26 comporte, en outre, un convertisseur de tension DC/DC 29 qui est raccordé, d'un côté, à la pile à combustible 28 et de l'autre côté au moteur 23 et au dispositif de stockage de l'énergie 27. Le convertisseur de tension DC/DC 29 permet de convertir le niveau de tension délivré par la pile à combustible 28 au niveau de tension requis par le moteur 27 et le dispositif de stockage de l'énergie 27.

De manière connue en soi, une telle pile à combustible 28 est le siège d'une réaction d'oxydo-réduction qui transforme l'hydrogène provenant du réservoir de gaz sous pression 21 et l'oxygène de l'air en électricité, en eau et en chaleur. Selon un mode de réalisation, le système d'alimentation électrique 26 est également logé, en intégralité ou en partie, dans le compartiment arrière 22.

Selon un mode de réalisation, le moteur 23 est accouplé à une pompe permettant l'actionnement hydraulique du mât de levage. Selon un autre mode de réalisation, le chariot élévateur 1 comporte également un moteur électrique dédié, non illustré, qui est raccordé au système d'alimentation électrique 26 et est accouplé à une pompe permettant l'actionnement hydraulique du mât de levage.

La [Fig.2] illustre un chariot élévateur 1 selon un second mode de réalisation. Ce mode de réalisation diffère de celui décrit ci-dessus en relation avec la [Fig.1] en ce que deux réservoirs 30, 31 contenant du gaz sous pression sont placés entre le montant arrière 15 de l'un des arceaux latéraux 13, 14 et la roue arrière 7, 8 correspondante. Les axes centraux X et X' des deux réservoirs de gaz sous pression 30, 31 sont disposés parallèlement l'un à l'autre. Les axes centraux X et X' s'étendent sensiblement dans un plan longitudinal. En outre, comme dans le mode de réalisation de la [Fig.1], chacun des réservoirs 30, 31 est incliné dans la même sens que la portion arrière 15b du montant arrière 15 de l'arceau latéral 13. En d'autres termes, les axes X et X' sont parallèles à Y ou forment un angle par rapport audit axe Y qui est inférieur à 30°, avantageusement inférieur à 15° et de préférence inférieur à 10°.

De manière avantageuse, le chariot élévateur 1 comporte deux réservoirs 30, 31, tels que décrits ci-dessus, de chaque côté du chariot élévateur 1.

La [Fig.3] illustre un chariot élévateur 1 selon un troisième mode de réalisation. Ce mode de réalisation diffère du mode de réalisation de la [Fig.1] en ce qu'il comporte en outre un ou plusieurs réservoirs 32, 33 contenant du gaz sous pression qui sont positionnés, à l'horizontale, transversalement et fixés sur le capot 34 du compartiment arrière 22. Ceci permet d'augmenter la capacité de stockage du gaz sans nuire de manière trop importante à la visibilité du conducteur.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Machine de manutention (1) comportant :
- un châssis (2) ;
- un arbre de roue avant (3) et un arbre de roue arrière (4) s'étendant transversalement et respectivement équipés de deux roues avant (5, 6) et de deux roues arrière (7, 8) ;
- un dispositif de manutention de charge (9) qui est monté à l'avant du châssis (2),
- une cabine de pilotage (10) fixée au châssis (2) et équipée d'un siège (11) ; la cabine de pilotage (10) comportant une structure de cabine comportant deux arceaux latéraux (13, 14), chaque arceau latéral (13, 14) comportant un montant avant (16) et un montant arrière (15) reliés l'un à l'autre ; **caractérisée par**
- au moins un réservoir (21, 30, 31) contenant du gaz sous pression qui est fixé au châssis (2) et est positionné, au moins en partie, entre le montant arrière (15) de l'un des arceaux latéraux (13, 14) et l'une des roues arrières (7, 8).

2. Machine de manutention (1) selon la revendication 1, dans laquelle chaque montant arrière (15) comporte une portion supérieure (15a) et une portion inférieure (15b) inclinée l'une par rapport à l'autre, la portion inférieure (15b) étant inclinée vers l'arrière en direction de la portion supérieure (15a) et dans lequel le réservoir (21, 30, 31) est positionné entre la portion inférieure (15b) du montant arrière (15) et la roue arrière (7, 8).

3. Machine de manutention (1) selon la revendication 1 ou 2, dans laquelle le réservoir (21, 30, 31) présente une forme de cylindre de révolution autour d'un axe central X, ledit axe central X étant incliné, de bas en haut, vers l'arrière.

4. Machine de manutention (1) selon les revendications 2 et 3 prises en combinaison, dans laquelle la portion inférieure (15b) du montant arrière (15) s'étend selon un axe Y et dans lequel, en projection dans un plan longitudinal, ledit axe Y et l'axe central X sont parallèles l'un à l'autre ou forment ensemble un angle inférieur à 30°.

5. Machine de manutention (1) selon l'une quelconque des revendications 1 à 4, comportant au moins deux réservoirs (21, 30, 31) contenant du gaz sous pression et fixés au châssis (2), les deux réservoirs (21, 30, 31) étant respectivement positionnés entre le montant arrière (15) de l'un et l'autre des arceaux latéraux (13, 14) et l'une des roues arrière (7, 8).

6. Machine de manutention (1) selon l'une quelconque des revendications 1 à 5, comportant au moins deux réservoirs (30, 31) contenant du gaz sous pression et fixés au châssis (2), les deux réservoirs (30, 31) étant positionnés entre le montant arrière (15) de l'un des arceaux latéraux (13, 14) et l'une des roues arrière (7, 8).

7. Machine de manutention (1) selon la revendication 6, dans laquelle les deux réservoirs (30, 31) présentent une forme de cylindre de révolution respectivement autour d'un axe central X et d'un axe central X', lesdits axes centraux X et X' étant parallèles l'un à l'autre.

8. Machine de manutention (1) selon l'une quelconque des revendications 1 à 7, comportant en outre un compartiment arrière (22) fixé au châssis (2) derrière la cabine de pilotage (10).

9. Machine de manutention (1) selon la revendication 8, comportant en outre un moteur (23) qui est configuré pour assurer le déplacement du chariot élévateur (1) et qui est logé dans le compartiment arrière (22).

10. Machine de manutention (1) selon la revendication 8 ou 9, dans laquelle le compartiment arrière (22) comporte un capot (34) et comportant en outre un ou plusieurs réservoirs (32, 33) contenant du gaz sous pression qui sont positionnés, à l'horizontale, transversalement et fixés sur ledit capot (34).

11. Machine de manutention (1) selon l'une quelconque des revendications 1 à 10, dans laquelle l'au moins un réservoir (21) contient un gaz choisi parmi le Gaz Naturel Liquéfié (GNL), le Gaz de Pétrole Liquéfié (GPL) et l'hydrogène.

12. Machine de manutention (1) selon l'une quelconque des revendications 1 à 11, dans laquelle le dispositif de manutention de charge (9) est un mât de levage.

## Patentansprüche

1. Handhabungsmaschine (1), umfassend:
- ein Chassis (2);
- eine Vorderradachse (3) und eine Hinterradachse, dies sich quer erstreckend und jeweils mit zwei Vorderrädern (5,
- eine Vorrichtung (9) zur Handhabung von Lasten, die vor dem Chassis (2) montiert ist,
- eine Fahrerkabine (10), die an dem Chassis (2) befestigt ist und mit einem Sitz (11) ausgestattet ist, wobei die Fahrerkabine (10) eine Kabinenstruktur aufweist mit zwei Seitenbügeln (13, 14), wobei jeder Seitenbügel (13, 14) einen vorderen Holm (16) und einen hinteren Holm (15) aufweist, die miteinander verbunden sind,
**gekennzeichnet durch**
- mindestens einen Druckgas enthaltenden Behälter (21, 30, 31), der an dem Chassis (2) befestigt und zumindest zum Teil zwischen dem hinteren Holm (15) eines der Seitenbügel (13, 14) und einem der Hinterräder (7, 8) positioniert ist.

2. Handhabungsmaschine (1) nach Anspruch 1, wobei jeder hintere Holm (15) einen oberen Abschnitt (15a) und einen unteren Abschnitt (15b), die zueinander geneigt sind, aufweist, wobei der untere Abschnitt (15b) nach hinten in Richtung des oberen Abschnitts (15a) geneigt ist und wobei der Behälter (21, 30, 31) zwischen dem unteren Abschnitt (15b) des hinteren Holms (15) und dem Hinterrad (7, 8) positioniert ist.

3. Handhabungsmaschine (1) nach Anspruch 1 oder 2, wobei der Behälter (21, 30, 31) die Form eines Kreiszylinders um eine zentrale Achse X aufweist, wobei die zentrale Achse X von unten nach oben nach hinten geneigt ist.

4. Handhabungsmaschine (1) nach Anspruch 2 und 3 in Kombination, wobei sich der untere Abschnitt (15b) des hinteren Holms (15) entlang einer Achse Y erstreckt und wobei die Achse y und die zentrale Achse X in Längsrichtung projiziert zueinander parallel sind oder zusammen einen Winkel kleiner 30° bilden.

5. Handhabungsmaschine (1) nach einem der Ansprüche 1 bis 4, umfassend mindestens zwei Behälter (21, 30, 31), die Druckgas enthalten und an dem Chassis (2) befestigt sind, wobei die beiden Behälter (21, 30, 31) jeweils zwischen dem hinteren Holm (15) des einen und des anderen der Seitenbügel (13, 14) und einem der Hinterräder (7,8) positioniert sind.

6. Handhabungsmaschine (1) nach einem der Ansprüche 1 bis 5, umfassend mindestens zwei Behälter (30, 31), die Druckgas enthalten und an dem Chassis (2) befestigt sind, wobei die beiden Behälter (30, 31) zwischen dem hinteren Holm (15) eines der Seitenbügel (13, 14) und einem der Hinterräder (7, 8) positioniert sind.

7. Handhabungsmaschine (1) nach Anspruch 6, wobei die beiden Behälter (30, 31) jeweils die Form eines Kreiszylinders um eine zentrale Achse X und um eine zentrale Achse X' aufweisen, wobei die zentralen Achse X und X' parallel zueinander sind.

8. Handhabungsmaschine (1) nach einem der Ansprüche 1 bis 7, ferner umfassend ein hinteres Fach (22), das hinter der Fahrerkabine (10) an dem Chassis (2) befestigt ist.

9. Handhabungsmaschine (1) nach Anspruch 8, ferner umfassend einen Motor (23), der dazu eingerichtet ist, den Gabelstapler (1) zu bewegen, und der in dem hinteren Fach (22) untergebracht ist.

10. Handhabungsmaschine (1) nach Anspruch 8 oder 9, wobei das hintere Fach (22) eine Haube (34) aufweist, und ferner umfassend einen oder mehrere Druckgas enthaltende Behälter (32, 33), die in der Horizontalen quer positioniert und an der Haube (34) befestigt sind.

11. Handhabungsmaschine (1) nach einem der Ansprüche 1 bis 10, wobei zumindest ein Behälter (21) ein Gas enthält, das ausgewählt ist aus Flüssiggas (LNG), Autogas (LPG) und Wasserstoff.

12. Handhabungsmaschine (1) nach einem der Ansprüche 1 bis 11, wobei die Vorrichtung (9) zur Handhabung von Lasten ein Hubmast ist.

## Claims

1. A handling machine (1) including:
- a chassis (2),
- a front wheel shaft (3) and a rear wheel shaft (4) extending transversely and respectively fitted with two front wheels (5, 6) and two rear wheels (7, 8),
- a load handling device (9) that is mounted on the front of the chassis (2),
- a driving cab (10) fastened to the chassis (2) and fitted with a seat (11), the driving cab (10) including a cab structure including two lateral arches (13, 14), each lateral arch (13, 14) including a front upright (16) and a rear upright (15) that are connected to one another, **characterised by**
- at least one tank (21, 30, 31) containing pressurized gas that is fastened to the chassis (2) and positioned, at least in part, between the rear upright (15) of one of the lateral arches (13, 14) and one of the rear wheels (7, 8).

2. The handling machine (1) as claimed in claim 1, wherein each rear upright (15) includes an upper portion (15a) and a lower portion (15b) that are inclined in relation to one another, the lower portion (15b) being inclined rearward toward the upper portion (15a), and wherein the tank (21, 30, 31) is positioned between the lower portion (15b) of the rear upright (15) and the rear wheel (7, 8).

3. The handling machine (1) as claimed in claim 1 or 2, wherein the shape of the tank (21, 30, 31) is a cylinder of revolution about a central axis X, said central axis X being inclined, from bottom to top, toward the rear.

4. The handling machine (1) as claimed in claims 2 and 3 in combination, wherein the lower portion (15b) of the rear upright (15) extends along an axis Y, and wherein, in projection on a longitudinal plane, said axis Y and the central axis X are parallel to one another or together form an angle of less than 30°.

5. The handling machine (1) as claimed in any one of claims 1 to 4, including at least two tanks (21, 30, 31) containing pressurized gas that are fastened to the chassis (2), the two tanks (21, 30, 31) being positioned respectively between the rear upright (15) of each of the lateral arches (13, 14) and one of the rear wheels (7, 8).

6. The handling machine (1) as claimed in any one of claims 1 to 5, including at least two tanks (30, 31) containing pressurized gas that are fastened to the chassis (2), the two tanks (30, 31) being positioned between the rear upright (15) of one of the lateral arches (13, 14) and one of the rear wheels (7, 8).

7. The handling machine (1) as claimed in claim 6, wherein the shape of the two tanks (30, 31) is a cylinder of revolution respectively about a central axis X and a central axis X', said central axes X and X' being parallel to one another.

8. The handling machine (1) as claimed in any one of claims 1 to 7, further including a rear compartment (22) fastened to the chassis (2) behind the driving cab (10).

9. The handling machine (1) as claimed in claim 8, further including a motor (23) that is designed to move the power lift truck (1) and that is housed in the rear compartment (22).

10. The handling machine (1) as claimed in claim 8 or 9, wherein the rear compartment (22) includes a cover (34) and further includes one or more tanks (32, 33) containing pressurized gas that are positioned horizontally and transversely, and fastened to said cover (34).

11. The handling machine (1) as claimed in any one of claims 1 to 10, wherein the at least one tank (21) contains one of the following gases: liquefied natural gas (LNG), liquefied petroleum gas (LPG), and hydrogen.

12. The handling machine (1) as claimed in any one of claims 1 to 11, wherein the load handling device (9) is a lifting mast.
